# EUROPEAN PATENT APPLICATION

(11) **EP 4 779 959 A1**
(43) Date of publication of application: **22.07.2026**
(21) Application number: 26151952.4
(22) Date of filing: 15.01.2026
(51) Int. Cl.: H04L 67/52, H04W 4/02, H04W 64/00, H04W 84/10, H04W 88/16

(54) **SYSTEMS AND METHODS FOR ENHANCING LOCATION ACCURACY OF NETWORK DEVICES USING MOBILE DEVICE LOCATION DATA**

(30) Priority: 16.01.2025 US 202519024765
(71) Applicant: T-Mobile Innovations LLC, Bellevue, WA 98006 (US)
(72) Inventor: SEO, Mincheol, Bellevue, 98006 (US)
(74) Representative: Suddaby, Mark Edward

(57) **Abstract**

Systems and methods are disclosed for improving location-based functionality and configuration of broadband CPEs using mobile device location data. In accordance with some embodiments, a method includes, by a network device that provides access to a wide area network (WAN) for connected devices, receiving a request from a mobile device to join a local network managed by the network device. The method further includes, in response to the request, connecting the mobile device to the local network and sending a command from the network device to the mobile device to request location data for the mobile device. The method further includes receiving the location data from the mobile device in response to the command and providing a location of the network device to a server associated with the network device by sending the location data for the mobile device to the server over the WAN.

## Description

### TECHNICAL FIELD

Various embodiments of the present technology relate to enabling location-based services and capabilities in broadband customer premises equipment.

### BACKGROUND

Broadband customer premises equipment (CPEs) are devices that facilitate access to the internet via a local network. Broadband CPEs are often deployed at customer homes, offices, schools, hospitals, and other residential and industrial locations. Broadband CPEs serve as the interface between a service provider's network infrastructure and the customer's local network. These devices often integrate modem and router functionalities, enabling connection to broadband technologies such as DSL, cable, fiber optics, satellite, or fixed wireless access (e.g., 4G, 5G, and 6G networks). Once connected to the broadband network, the CPE manages the distribution of internet connectivity within the premises, providing communication channels through Wi-Fi, Ethernet, or similar interfaces. Broadband CPEs enable high-speed internet access, supporting a range of applications from residential use to enterprise-grade connectivity.

Mobile devices (e.g., smartphones) are one example of a device that may connect to the internet via a broadband CPE. Mobile devices are often equipped with advanced location-tracking capabilities, and typically provide more accurate location data compared to what a CPE is capable of. This accuracy is attributed at least in part to the combination of technologies embedded within modem mobile devices, including GPS receivers, Wi-Fi positioning systems, and cellular network triangulation, but also to the mere mobility of the device, allowing the device to optimize its positioning in ways that stationary devices, like broadband CPEs, cannot. Many broadband CPEs also lack integrated GPS modules for location tracking and may rely on less precise methods such as IP-based geolocation or cell tower triangulation for location data.

Management servers for broadband CPEs play an important role in remote configuration, monitoring, and maintenance of the devices. A management server communicates with a CPE over a secure connection, often using protocols such as TR-069 or HTTPS. The management server enables service providers to deliver firmware updates, apply configuration changes, and monitor device performance metrics in real time. Additionally, the management server may collect diagnostic data to identify and address potential issues, ensuring optimal performance and minimizing the need for manual interventions.

It is with respect to this general technical environment that aspects of the present technology disclosed herein have been contemplated. Furthermore, although a general environment has been discussed, it should be understood that the examples described herein should not be limited to the general environment identified in the background.

### BRIEF SUMMARY OF THE INVENTION

This Summary is provided to introduce a selection of concepts in a simplified form that are further described below in the Detailed Description. This Summary is not intended to identify key features or essential features of the claimed subject matter, nor is it intended to be used as an aid in determining the scope of the claimed subject matter.

Various embodiments of the present technology generally relate to improving functionality of network devices. More specifically, the technology disclosed herein includes systems and methods for improving location-based functionality and configuration of broadband CPEs using mobile device location data. In a first embodiment, a method includes, by a network device, receiving a request from a mobile device to join a local network managed by the network device. The network device provides access to a wide area network for devices connected to the network device. The method further includes, in response to the request, connecting the mobile device to the local network and sending a command from the network device to the mobile device to request location data for the mobile device. The method further includes receiving the location data from the mobile device in response to the command and providing a location of the network device to a server associated with the network device by sending the location data for the mobile device to the server over the wide area network.

In some examples, the method further includes receiving, in addition to the location data, a capture time of the location data and a number of satellites utilized to determine a location of the mobile device indicated by the location data. The method may further include sending a second command to a second mobile device connected to the local network to request different location data for the second mobile device, receiving the different location data from the second mobile device, and receiving a capture time of the different location data and a number of satellites utilized to determine a location of the second mobile device indicated by the location data. The method may additionally include conducting a first comparison of the capture time of the different location data to the capture time of the location data, conducting a second comparison of the number of satellites utilized to determine the location of the second mobile device to the number of satellites utilized to determine the location of the mobile device, and determining, based on at least one of the first comparison and the second comparison, to provide the location data from the mobile device to the server.

In some examples, the method further includes sending a notification to be displayed on the mobile device. The notification may instruct that the mobile device be moved closer to a window. In some implementations of the present embodiment, the location data is Global Positioning System (GPS) data collected with a GPS sensor of the mobile device. In some examples, the method includes sending the location data to a different device connected to the local network. The different device may include a television, a security camera, or a mesh node. In some implementations, the network device is a fixed wireless gateway and the wide area network is a wireless communication network. The server, in some examples, is a management server responsible for configuration and maintenance of the network device.

In an alternative embodiment a system includes one or more computer-readable storage media, a processing system operatively coupled with the one or more computer-readable storage media, and program instructions stored on the one or more computer-readable storage media. The program instructions, when read and executed by the processing system, direct the processing system to at least receive a request from a mobile device to join a local network managed by the network device. The network device provides access to a wide area network for devices connected to the network device. The program instructions, in response to the request, direct the processing system to connect the mobile device to the local network. The program instructions further direct the processing system to send a command from the network device to the mobile device to request location data for the mobile device, receive the location data from the mobile device in response to the command, and provide a location of the network device to a server associated with the network device by sending the location data for the mobile device to the server over the wide area network.

In yet another embodiment, one or more non-transitory computer-readable storage media have program instructions stored thereon, wherein the program instructions, when executed by a computing system, direct the computing system to perform operations that include receiving a request from a mobile device to join a local network managed by a network device. The network device provides access to a wide area network for devices connected to the network device. The operations further include, in response to the request, connecting the mobile device to the local network. The operations further include, sending a command from the network device to the mobile device to request location data for the mobile device, receiving the location data from the mobile device in response to the command, and providing a location of the network device to a server associated with the network device by sending the location data for the mobile device to the server over the wide area network.

### BRIEF DESCRIPTION OF THE DRAWINGS

Many aspects of the disclosure can be better understood with reference to the following drawings. The components in the drawings are not necessarily drawn to scale. Moreover, in the drawings, like reference numerals designate corresponding parts throughout the several views. While several embodiments are described in connection with these drawings, the disclosure is not limited to the embodiments disclosed herein. On the contrary, the intent is to cover all alternatives, modifications, and equivalents.
Figure 1 illustrates an overview of a location sharing environment in accordance with some embodiments of the present technology;
Figure 2 is a first flowchart illustrating a series of steps performed by a network device in accordance with some embodiments of the present technology;
Figure 3 illustrates an overview of a location sharing environment in accordance with some embodiments of the present technology;
Figure 4 is a second flowchart illustrating a series of steps performed by a network device in accordance with some embodiments of the present technology;
Figure 5 is a third flowchart illustrating a series of steps performed by a network device in accordance with some embodiments of the present technology;
Figure 6 illustrates an example of a notification pushed to a mobile device by a network device in accordance with some embodiments of the present technology;
Figure 7 is a fourth flowchart illustrating a series of steps performed by a network device in accordance with some embodiments of the present technology;
Figure 8 illustrates CPE and mobile device architecture in a location sharing environment in accordance with some embodiments of the present technology; and
Figure 9 illustrates a computing system suitable for implementing the various operational environments, architectures, processes, scenarios, and sequences discussed below and with respect to the other Figures.

### DETAILED DESCRIPTION

The present technology includes systems and methods for enhancing location accuracy of network devices using mobile device location data. The system disclosed herein addresses limitations of current network devices (e.g., broadband CPEs), which currently rely on imprecise methods of obtaining location data-such as obtaining location data from user profile information, IP-based geolocation, or cell tower triangulation, as a few examples.

In accordance with the present disclosure, network devices leverage mobile device location data to create an accurate, location-aware network management system. When a mobile device (e.g., smartphone) connects to the network (e.g., Wi-Fi) of a customer premises equipment (CPE), it shares its Global Positioning System (GPS) location data with the CPE. The GPS data is then forwarded to a management server for network management purposes, including location-based services. The CPE may also forward this location information to other devices connected to the network that lack GPS capabilities and/or have poor GPS signals. In some examples, the CPE validates the received data based at least in part on the time of capture by the mobile device and/or the number of satellites used to determine the location of the mobile device.

Poor location data is problematic for broadband CPEs because location information is valuable for maintenance purposes, location-based services, load balancing purposes, and the like. For instance, knowing the precise location of a CPE allows service providers to efficiently dispatch technicians for repairs or upgrades. Location data also facilitates location-based services, such as targeted content delivery and location tracking, thereby enhancing the user experience. Furthermore, service providers can leverage GPS information to distribute network load effectively, preventing congestion and ensuring optimal service delivery across different regions.

While some broadband CPEs include GPS sensors for receiving GPS signals directly from satellites, this method of obtaining location information has numerous limitations. For example, GPS signals are inherently weaker indoors as they are susceptible to interference from obstacles like roofs, walls, trees, and the like. This often leads to inaccurate location readings or total inability to acquire a GPS signal. Additionally, many CPEs do not include GPS sensors, precluding the ability to determine their location via satellite signals. In the absence of reliable GPS data, some CPEs rely on user-provided location information during account setup, during which users manually input their address, which may not be accurate or reflect the device's actual physical location at a given time. Some service providers employ IP-based geolocation techniques, attempting to determine device location based on IP address ranges. However, this method is inherently inaccurate, prone to errors, and requires frequent updates to maintain accuracy. This method also relies on third-party services, introducing additional complexities and potential points of failure.

The limitations of traditional location determination methods for CPEs create a need for a more reliable and accurate solution. Thus, the technology of the present disclosure addresses these shortcomings by leveraging the widespread presence and robust GPS capabilities of mobile devices. Mobile devices, being frequently used outdoors, often have strong GPS signals and accurate location information. By enabling CPEs to obtain location information from connected mobile devices, the technology significantly improves location accuracy and enables a broader range of location-based services.

Various technical effects may be appreciated from the implementations disclosed herein. Such technical effects include improved location accuracy for broadband CPEs, improved network management, enhanced location-based services, and improved user experience. For example, the technology enables more personalized and relevant services based on location. Additionally, users may experience improved Wi-Fi performance as location data enables features such as Wi-Fi frequency management to dynamically adjust frequency usage based on location to avoid interference with other services. The location sharing capabilities disclosed herein also enable location-based content delivery, wherein online services can provide more relevant content recommendations and comply with regional licensing restrictions. Additionally, by understanding the geographic distribution of CPEs, areas experiencing network congestion or performance issues can be identified and proactive steps can be taken to optimize network resources.

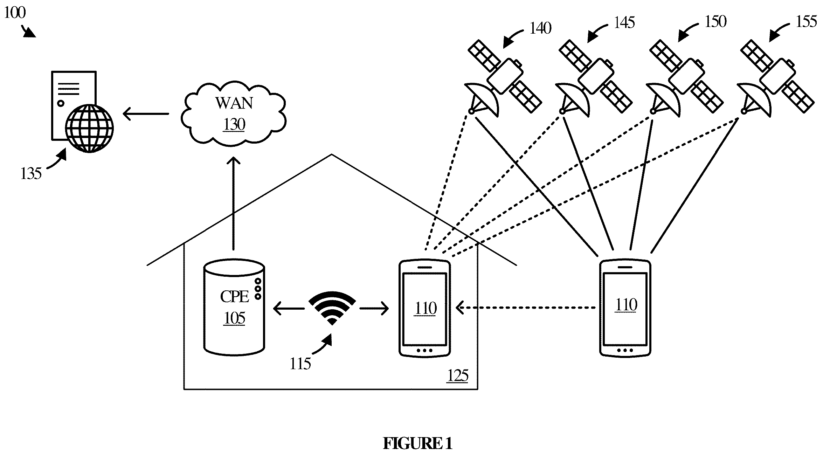

Figure 1 illustrates location sharing environment 100. Location sharing environment 100 includes CPE 105, mobile device 110, network 115, building 125, wide area network (WAN) 130, management server 135, satellite 140, satellite 145, satellite 150, and satellite 155. The components shown in Figure 1 are merely for purposes of example, and location sharing environment 100 may include additional, fewer, or different elements than those illustrated in the example of Figure 1.

In accordance with the present example, CPE 105 is representative of one or more network devices (e.g., a broadband CPE, a modem, and/or a router) installed at a customer's premises (i.e., building 125). CPE 105 acts as the interface between the end-user and the service provider's network infrastructure. CPE 105 enables internet connectivity and manages the distribution of this connectivity within the local network, network 115. CPE 105 serves functions such as connection establishment with the service provider's network (i.e., WAN 130), routing and distributing the connection to devices within the premises via Wi-Fi, ethernet, or the like, and supporting device management tasks such as network configuration, quality of service (QoS), and security measures.

CPE 105 may be representative of various types of devices supporting various types of broadband technology, such as modems, routers, gateways, hubs, or any variations or combinations thereof. For example, CPE 105, in some examples, is representative of a Digital Subscriber Line (DSL) CPE, which provides a DSL network and may include a DSL modem to terminate the copper line connection and a router for internal networking. In other examples, CPE 105 is representative of a cable CPE used in cable broadband networks and may include a cable modem and router for high-speed data transmission. In other examples, CPE 105 is representative of a fiber CPE that supports fiber-optic broadband services and includes optical network terminals (ONTs) to terminate the fiber connection and may be paired with gateways for local distribution. Still in other examples, CPE 105 is representative of a fixed wireless gateway that connects to wireless broadband networks, such as 4G LTE networks, 5G networks, 6G networks, or other wireless networks. CPE 105 may be, in some examples, a satellite terminal designed for satellite broadband services in which internet connectivity is obtained via satellites or other space-based systems. Moreover, CPE 105 may be representative of a hybrid CPE, which combines multiple broadband technologies, such as DSL and LTE, to provide redundancy or failover capabilities.

CPE 105 includes, in some embodiments, a modem to terminate (i.e., establish) the broadband connection, a router to distribute the internet connection locally, a processor to manage data flow and network traffic, memory and storage for firmware and configuration data, and various interfaces such as Ethernet ports, Wi-Fi radios, USB ports, VoIP ports, or others. In some examples, CPE 105 includes features for dual-band or tri-band Wi-Fi for supporting multiple devices, QoS for prioritizing specific traffic types, remote management through protocols like TR-069, and IoT integration for connecting smart home devices. While CPE 105 is illustrated within building 125, CPE 105, in other examples, may be deployed in a variety of settings from residential homes to enterprise offices and rural or remote locations.

In accordance with the present example, CPE 105 interfaces with a WAN (i.e., WAN 130) to provide internet connectivity to local devices within the premises. CPE 105 provides access to WAN 130 for local devices (e.g., mobile device 110). CPE 105 provides internet connectivity via network 115. Network 115 is a wireless local area network (WLAN), such as a Wireless Fidelity (Wi-Fi) network, and enables devices to connect to the internet wirelessly over relatively short distances using radio waves.

Mobile device 110 is representative of a portable computing device designed for communication, connectivity, and computation. Mobile device 110 may be representative of a smartphone, tablet, wearable device, or other mobile device. Mobile device 110 includes at least a processor, central processing unit (CPU), graphical processing unit (GPU), memory including random-access memory (RAM) and storage, and a battery. Mobile device 110 may include a display for visual output and/or touch input capabilities. Mobile device 110 includes one or more connectivity modules, including Wi-Fi, Bluetooth, and/or cellular radios to facilitate wireless communication with networks and other devices. Mobile device 110 may further include sensors such as accelerometers, gyroscopes, and proximity sensors.

In accordance with the example of Figure 1, mobile device 110 is location-enabled, utilizing one or more technologies to determine its geographic position. Mobile device 110 is equipped with GPS technology, including at least one GPS sensor. Mobile device 110 uses the GPS technology thereon to calculate precise latitude, longitude, and altitude based on signals from satellites (i.e., at least satellite 140, satellite 145, satellite 150, and satellite 155). To enhance accuracy and reliability, mobile device 110 may include auxiliary technologies such as assisted GPS (A-GPS) and/or Wi-Fi positioning. Cellular triangulation and other network-based methods may further complement location capabilities.

In accordance with the example of Figure 1, management server 135 is a centralized system designed to remotely monitor, configure, and/or maintain CPE 105. Management server 135 communicates with CPE 105 via WAN 130 using one or more protocols (e.g., TR-069, HTTP/HTTPS, SNMP, MQTT, WebSockets, CoAP). Functions of management server 135 may include but are not limited to delivering firmware updates to CPE 105, applying configuration changes to CPE 105, collecting diagnostic data from CPE 105, and monitoring device performance of CPE 105. The remote access of management server 135 to CPE 105 enables service providers to streamline operations, troubleshoot issues, and optimize performance without the need for on-site intervention. Management server 135 may be a component in managing large-scale deployment of CPEs, in some examples.

In accordance with the example of Figure 1, satellite 140, satellite 145, satellite 150, and satellite 155 are representative of GPS satellites. Each of these satellites is a component of the Global Positioning System, a satellite-based navigation network that provides precise location, velocity, and timing information to GPS receivers, including those in mobile devices (e.g., mobile device 110). Each satellite of satellite 140, satellite 145, satellite 150, and satellite 155, in some examples, includes one or more atomic clocks to maintain precise timing and broadcasts signals containing the satellite's orbital position and timestamp. These signals are transmitted on specific radio frequencies and include data for trilateration, the process by which a GPS receiver calculates its position by measuring the time delay of signals from multiple satellites.

It should be noted that, while the present example is described in the context of the GPS system, including GPS satellites and a GPS-enabled mobile device, other examples may utilize alternative or complementary positioning systems. Such systems may include existing global navigation satellite systems (GNSS), such as GLONASS, Galileo, or BeiDou, as well as regional navigation systems like QZSS or NavIC. Additional technologies, such as low Earth orbit (LEO) satellite constellations, enhanced terrestrial systems like eLoran, or network-based solutions leveraging 5G cellular positioning, may be used in place of or in conjunction with the GPS system. Other positioning technologies such as quantum navigation systems or hybrid approaches integrating GNSS with inertial measurement units (IMUs), vision-based systems, or other location techniques, are also within the scope of the disclosure. Accordingly, the concepts described herein are not limited to GPS but extend to any present or emerging positioning technologies that provide similar or enhanced positioning functionality.

In some embodiments mobile device 110 must receive signals from at least four satellites to determine its location. By calculating the time it takes for each signal to reach the device, the receiver computes its distance from each satellite. Using trilateration, the receiver determines its latitude, longitude, and altitude by intersecting the spheres formed by these distance measurements. A fourth satellite signal may be used to correct for timing discrepancies in the device's internal clock. The satellite network, including satellite 140, satellite 145, satellite 150, and satellite 155, thereby enables mobile devices, such as mobile device 110, to achieve accurate location data for navigation, geolocation, and other location-based services, even in dynamic or remote environments.

In the example of Figure 1, mobile device 110 moves from outside building 125 to inside building 125 and connects to network 115 of CPE 105 (e.g., a Wi-Fi network). When mobile device 110 joins network 115, it automatically shares its location data with CPE 105, in some examples. Mobile device 110, having acquired a strong GPS signal while outside, utilizes its GPS sensor and cellular modem to maintain accurate location information. The location data that mobile device 110 shares with CPE 105 upon connecting to CPE 105 via the local network may include but is not limited to a latitude, longitude, elevation, source of GPS data, number of satellites acquired, and the time of capture.

Depending on the particular embodiment, mobile device 110 shares its location information with CPE 105 through established communication protocols. For example, mobile device 110 may share its location data using Wi-Fi (e.g., IEEE 802.11) or Ethernet. The data exchange occurs over networking layers, with the transport layer utilizing protocols such as Transmission Control Protocol/Internet Protocol (TCP/IP) or User Datagram Protocol (UDP). In other examples, the location data may be shared using the Hypertext Transfer Protocol (HTTP/HTTPS), the Simple Network Management Protocol (SNMP), or custom Application Programming Interfaces (APIs). Still in other examples, the location data is shared using protocols such as Message Queuing Telemetry Transport (MQTT) or WebSockets. In some cases, the Dynamic Host Configuration Protocol (DHCP) facilitates initial setup by enabling CPE 105 to assign an IP address to mobile device 110. In some examples, the location data is shared between mobile device 110 and CPE 105 via Bluetooth.

Upon receiving the location data from mobile device 110, CPE 105 validates the received information. In particular, CPE 105 may validate at least the time of capture and the number of satellites acquired to determine the recency and accuracy of the location data.

CPE 105, after validating and/or selecting the most accurate location data, shares this information with management server 135 via WAN 130. Management server 135 may use the shared location data for various purposes, including but not limited to maintenance, providing location-based services, and managing network load balance. The frequency at which location data is shared with CPE 105 and/or management server 135 may depend on a configured management policy (e.g., every few seconds, once per day, once per week).

In addition to sharing the location information with management server 135, CPE 105, in some examples, can also forward the location data to other devices connected to network 115, such as Wi-Fi extenders, smart TVs, or security devices, allowing those devices to utilize location-based services as the devices are enabled. It should be noted that, in some cases, Wi-Fi extenders can also report their location to management server 135, enabling management server 135 to recognize the connectivity of CPE 105 to its associated Wi-Fi extenders.

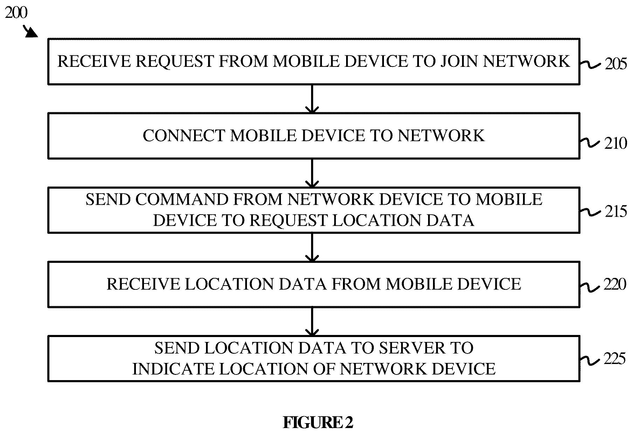

Figure 2 illustrates process 200. Process 200 is an exemplary operation of sharing location information in location sharing environment 100. The operations may vary in other examples. The operations of process 200, in some examples, are performed by a network device, such as CPE 105 in the example of Figure 1.

The operations of process 200 include receiving a request from a mobile device to join a network (step 205). In the example of Figure 1, CPE 105 receives a request from mobile device 110 to join network 115. Network 115 is managed by CPE 105. In some examples, mobile device 110 may automatically request to join network 115 upon coming into close enough proximity to CPE 105 to be in range of network 115. Mobile device 110, in some examples, is still outside building 125 when it requests to join network 115. In other examples, mobile device 110 is inside building 125 when it requests to join network 115. The request to join network 115, in some examples, includes credentials, such as a password or certificate, based on the network's security protocol (e.g., WPA2 or WPA3).

The operations of process 200 further include connecting the mobile device to the network (step 210). In the example of Figure 1, CPE 105 connects mobile device 110 to network 115 in response to the request to join the network. In some examples, to connect mobile device 110 to network 115, CPE 105 authenticates mobile device 110 by verifying the credentials included in the request and, upon successful authentication, assigns an IP address using the DHCP. Once connected, CPE 105 may establish an encrypted session to enable secure communication between mobile device 110 and network 115.

The operations of process 200 further include sending a command from the network device to the mobile device to request location data from the mobile device (step 215). In the example of Figure 1, CPE 105 sends a command to mobile device 110 specifically requesting its location data. CPE 105 may send the command using protocols such as HTTP or TCP/IP over network 115. CPE 105, in some embodiments, transmits a request packet to mobile device 110, prompting the device to retrieve and return its GPS data or other location data via the specified protocol. In some cases, the command sent from CPE 105 is sent automatically upon mobile device 110 joining the network and successfully authenticating. In other cases, CPE 105 may send a command to mobile device 110 at a later time for new or updated location information.

In some examples, the command sent from the network device to the mobile device to request location data is an Attention (AT) command, or a text-based instruction to configure or query communication devices (e.g., mobile device 110) over a communication interface. When a network device (e.g., CPE 105) sends the AT command to a mobile device, it may use an open port on the mobile device, such as a TCP/IP socket or a serial port, to establish communication. The AT command instructs the modem within the mobile device to perform the commanded task (e.g., using the AT+CGPSINF command to query GPS information such as latitude, longitude, and altitude). The CPE transmits the AT command and the mobile device listens on the designated port, processes the command, and responds with the requested data or an acknowledgement.

The operations of process 200 further include receiving the location data from the mobile device (step 220). In the example of Figure 1, CPE 105 receives the location data from mobile device 110 in response to the command sent. Upon receiving the request for location data from CPE 105, mobile device 110 transmits its most recent location data back to CPE 105. In some examples, mobile device 110 returns its location information via an open port using communication protocols such as HTTP, TCP/IP, or Bluetooth. The location data includes positional information such as latitude, longitude, and elevation, but may further include relevant data such as a source of the location data, a number of satellites used for determining the location, and the time of capture.

The operations of process 200 further include sending the location data to a server to indicate the location of the network device (step 225). In the example of Figure 1, CPE 105, after receiving the location data from mobile device 110, indicates its own location to management server 135 by sending the location data from mobile device 110 to management server 135 via WAN 130. CPE 105 may share the location information via WAN 130 using standardized protocols such as TR-069, TR-369, or HTTPS, as just a few examples. CPE 105 may send one or more data packets including the location information. In some examples, the location information sent to management server 135 includes all of the location data collected from mobile device 110. In other examples, the location information sent to management server 135 is more limited, only including location-specific information, such as latitude, longitude, and/or elevation.

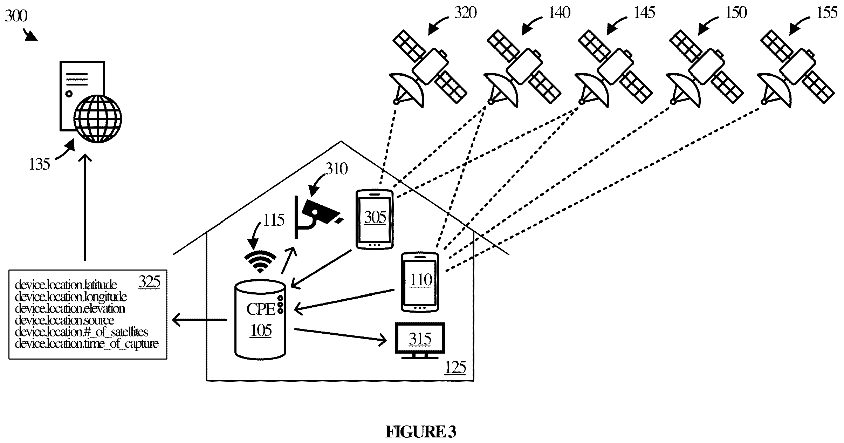

Figure 3 illustrates location sharing environment 300. Location sharing environment 300 includes CPE 105, mobile device 110, mobile device 305, network 115, building 125, TV 315, camera 310, management server 135, location data 325, satellite 140, satellite 145, satellite 150, satellite 155, and satellite 320. The components shown in Figure 3 are merely for purposes of example, and location sharing environment 300 may include additional, fewer, or different elements than those illustrated in the example of Figure 3.

In accordance with the example of Figure 3, CPE 105 receives location data (e.g., GPS data) from at least two mobile devices on network 115-mobile device 110 and mobile device 305. As previously described, CPE 105 may automatically receive the location data from each mobile device when each one joins network 115. At other times, CPE 105 may send a command requesting location data from either one or both of the mobile devices after they are already connected to network 115.

Upon receiving location data from both mobile device 110 and mobile device 305, CPE 105 validates the location data from each mobile device based on one or more factors that may include but are not limited to current time, time of capture, and number of satellites. For example, CPE 105 may compare the current time with the time of capture of the location data to ensure that it is recent. CPE 105 may also consider the timestamp of when the location information was recorded on the mobile device. Given that the accuracy of GPS location data increases with the number of satellites used for triangulation, CPE 105 may check that an adequate number of satellites were used (e.g., four) to determine the location.

In addition to validating the location data from each mobile device, CPE 105 may also compare the location data from each mobile device to determine which one to share with management server 135. For example, CPE 105 may compare the time of capture associated with the location data from each mobile device to determine which is more recent. Similarly, CPE 105 may compare the number of satellites used to determine the location of each mobile device to determine which is more accurate. CPE 105 may compare other aspects of the location data as well, such as the sources, elevations, longitudes, latitudes, or other components of the data.

In the example of Figure 3, mobile device 110 received signals from four GPS satellites to determine its location-satellite 140, satellite 145, satellite 150, and satellite 155. However, mobile device 305 received signals from only three GPS satellites to determine its location-satellite 320, satellite 140, and satellite 145. Thus, upon comparison, CPE 105 may choose to use the location data from mobile device 110 rather than the location data from mobile device 305 when sharing its location with management server 135.

In addition to receiving location information from the mobile devices, the technology of the present disclosure enables a CPE to share location information with other devices on the network, particularly those that are not equipped with location sensing (e.g., GPS) capabilities. For example, once CPE 105 has received and verified location data from mobile device 110, CPE 105 may forward some or all of the location data to other devices on network 115, including but not limited to camera 310 and TV 315. Other examples of network-connected devices with which location data may be shared via network 115 include network extenders or mesh nodes, speakers, thermostats, door locks and other security-related devices, gaming consoles, refrigerators, vacuums, air quality monitors, other internet-of-things (IoT) devices, gas and water leakage sensors, and the like. Thus, the non-GPS devices on network 115 can benefit from location-based services and functionalities based on the provided location information. For example, TV 315 (e.g., a smart TV) can utilize the shared GPS data to provide localized content. Likewise, camera 310 (e.g., a security camera) can report its location to a security company for enhanced services.

The location data shared from CPE 105 to other devices on the network may include information such as latitude, longitude, elevation, source of GPS data, number of satellites, and time of capture. This data may be communicated via various protocols, including but not limited to HTTP/HTTPS, TCP/IP, MQTT, Bluetooth, or other suitable protocols. CPE 105 can also utilize protocols like IEEE 1905.1 to share the acquired location information with devices such as Wi-Fi extenders or other compatible devices. For example, CPE 105 may use the Type-Length-Value (TLV) format defined in the IEEE 1905.1 standard during the pairing process or after pairing to transmit the location data.

In addition to sharing the location data with other devices on the network, CPE 105 shares the location data with management server 135. Sharing the CPE's location with a management server enables several advantageous functionalities for service providers, including improved service maintenance, enhanced location-based services, and better network management. For example, the location data for the CPE can be utilized to provide targeted, location-based services to customers, such as localized content delivery or targeted notifications. Additionally, knowledge of the CPE's location allows service providers to optimize network load balancing by strategically enabling or disabling services based on geographical demand, thereby preventing network overheads in densely populated areas and ensuring efficient service delivery across the network.

CPE 105, in some embodiments, shares location data 325 with management server 135 using standard data model formats, such as the Broadband Forum TR-181 Data Model, for example. Location data 325 includes latitude, longitude, elevation, the source of the location data (e.g., GPS or mobile device), the number of satellites used for calculation, and the time of capture. CPE 105 can communicate this information to management server 135 through various means, including HTTP/HTTPS, TCP/IP, TR-069, SNMP, MQTT, or other internet protocols. Location data 325 allows the service provider to understand where CPE 105 is located and utilize this information for service optimization and delivery of location-based services. The frequency of location updates can vary depending on the management server's configuration and service provider policies, potentially ranging from updates every few seconds to once per day, in some examples. This flexibility allows service providers to tailor location reporting frequency to specific needs, such as monitoring mobile CPEs or responding to network congestion.

It should be noted that CPE 105, in some examples, may be equipped with its own GPS receiver(s) to acquire location information directly from satellites. However, the signal strength can be significantly weakened by obstructions like roofs or other objects. Consequently, location data obtained from a mobile device connected to CPE 105 may be more accurate and reliable due to the mobile device's greater likelihood of having recent, unobstructed access to GPS signals. This approach prioritizes the use of the most accurate location data available, enhancing the reliability of location-based services and network management functions.

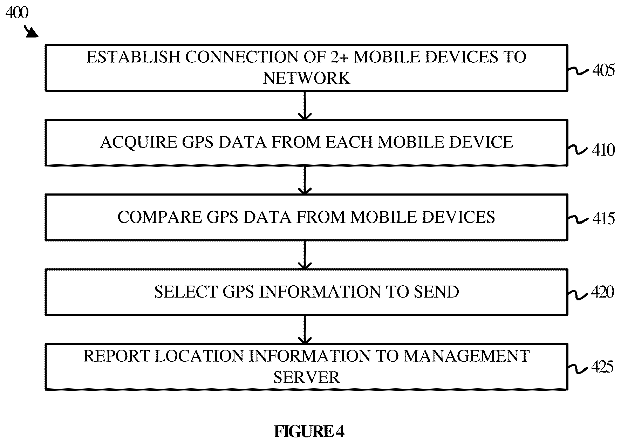

Figure 4 illustrates process 400. Process 400 is an exemplary operation of sharing location information in location sharing environment 300. The operations may vary in other examples. The operations of process 400, in some examples, are performed by a network device, such as CPE 105 in the examples of Figure 1 and Figure 3.

The operations of process 400 include establishing a connection of two or more mobile devices to a network (step 405). In the example of Figure 3, CPE 105 establishes a connection of mobile device 110 to network 115 as well as a connection of mobile device 305 to network 115. Establishing each connection, in some examples, is performed in response to a request to join the network from mobile device 110 and/or mobile device 305. The request may be sent automatically, in some examples, such as when the device is in close enough proximity to CPE 105 to be in range of network 115. A request to join network 115 may include credentials, such as a password or certificate, based on the network's security protocol. CPE 105, in some examples, to connect each mobile device to network 115, authenticates each mobile device by verifying the credentials included in the request and, upon successful authentication, assigns an IP address to each mobile device.

The operations of process 400 further include acquiring GPS data from each mobile device (step 410). In the example of Figure 3, CPE 105 acquires GPS data from mobile device 110 and mobile device 305. The GPS data may be acquired at the same time or at different times. In some examples, CPE 105 acquires the location data from mobile device 110 and mobile device 305 in response to sending a command to each of the devices. CPE 105 may send the commands using protocols such as HTTP/HTTPS or TCP/IP over network 115. CPE 105, in some embodiments, transmits a request packet to each mobile device, prompting the devices to retrieve and return their GPS data or other location data via the specified protocol. In some cases, the commands sent from CPE 105 are sent automatically upon mobile device 110 and/or mobile device 305 joining the network and successfully authenticating. In other cases, CPE 105 may send a command to mobile device 110 and/or mobile device 305 at a later time for new or updated location information.

In some examples, the commands sent from CPE 105 to mobile device 110 and mobile device 305 are AT commands. When CPE 105 sends an AT command to a mobile device, it may use an open port on the mobile device, such as a TCP/IP socket or a serial port, to establish communication. The AT command instructs the modem within the mobile device to perform the commanded task (e.g., using the AT+CGPSINF command to query GPS information such as latitude, longitude, and altitude). The CPE transmits the AT command and the mobile device listens on the designated port, processes the command, and responds with the requests data or an acknowledgement.

Upon receiving the request for location data from CPE 105, mobile device 110 and mobile device 305 transmit their most recent location data back to CPE 105. In some examples, the mobile devices return their location information via an open port using communication protocols such as HTTP/HTTPS, TCP/IP, or Bluetooth. The location data includes positional information such as latitude, longitude, and elevation, but may further include relevant data such as a source of the GPS data, a number of satellites used for location determination, and the time of capture.

The operations of process 400 further include comparing the GPS data from the mobile devices (step 415). In the example of Figure 3, CPE 105 compares the GPS data from mobile device 110 and mobile device 305 to determine which GPS data to share with management server 135. For example, CPE 105 may compare the time of capture associated with the location data from each mobile device to determine which is more recent. Similarly, CPE 105 may compare the number of satellites used to determine the location of each mobile device to determine which is more accurate. CPE 105 may compare other aspects of the location data as well, such as the sources, elevations, longitudes, latitudes, or other components of the data. In addition to comparing the location data from each mobile device, CPE 105 may also validate the location from each mobile device.

In some examples, comparing the GPS data from the mobile devices includes conducting a first comparison of the capture time of the GPS data from mobile device 110 to the capture time of the GPS data from mobile device 305 and conducting a second comparison of the number of satellites utilized to determine the location of mobile device 110 to the number of satellites utilized to determine the location of mobile device 305. The comparisons conducted and the order of comparisons, however, may differ in other examples.

The operations of process 400 further include selecting the GPS data to send to the management server (step 420). In the example of Figure 3, CPE 105 selects the GPS data from mobile device 110 to send to management server 135 based at least in part on the number of satellites used to acquire the GPS data by mobile device 110 as compared to mobile device 305. As shown in Figure 3, mobile device 110 received signals from four GPS satellites to determine its location-satellite 140, satellite 145, satellite 150, and satellite 155. However, mobile device 305 received signals from only three GPS satellites to determine its location-satellite 320, satellite 140, and satellite 145. Thus, upon comparison, CPE 105 chooses to use the location data from mobile device 110 rather than the location data from mobile device 305 when sharing its location with management server 135.

The operations of process 400 further include reporting location information for the CPE to a management server (step 425). In the example of Figure 3, CPE 105 indicates its own location to management server 135 by sending location data 325 from mobile device 110 to management server 135. In some examples, CPE 105 shares location data 325 via a WAN (e.g., WAN 130) using standardized protocols such as TR-069, TR-369, or HTTPS, for example. CPE 105 may send one or more data packets that include location data 325. In some examples, the location information sent to management server 135 includes all of the location data collected from mobile device 110. In other examples, the location information sent to management server 135 is more limited, only including location-specific information, such as latitude, longitude, and/or elevation.

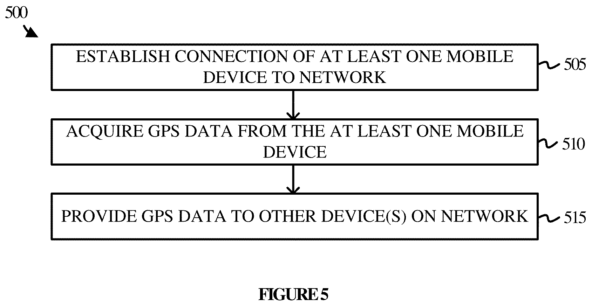

Figure 5 illustrates process 500. Process 500 is an exemplary operation of sharing location information in location sharing environment 300. The operations may vary in other examples. The operations of process 500, in some examples, are performed by a network device, such as CPE 105 in the examples of Figure 1 and Figure 3.

The operations of process 500 include establishing a connection of at least one mobile device to a network (step 505). In the example of Figure 3, CPE 105 establishes a connection of at least mobile device 110 to network 115. Establishing each connection, in some examples, is performed in response to a request to join the network from mobile device 110. The request may be sent automatically, in some examples, such as when mobile device 110 is in close enough proximity to CPE 105 to be in range of network 115. A request to join network 115 may include credentials, such as a password or certificate, based on the network's security protocol. CPE 105, in some examples, to connect mobile device 110 to network 115, authenticates the mobile device by verifying the credentials included in the request and, upon successful authentication, assigns an IP address to mobile device 110.

The operations of process 500 further include acquiring GPS data from at least one mobile device (step 510). In the example of Figure 3, CPE 105 acquires GPS data from mobile device 110. In some examples, CPE 105 acquires the location data from mobile device 110 in response to sending a command to the device. CPE 105 may send the command using protocols such as HTTP/HTTPS or TCP/IP over network 115, or via Bluetooth, in some examples. CPE 105, in some embodiments, transmits a request packet to mobile device 110, prompting the mobile device to retrieve and return its GPS data or other location data via the specified protocol. In some cases, the command sent from CPE 105 is sent automatically upon mobile device 110 joining the network and successfully authenticating. In other cases, CPE 105 may send a command to mobile device 110 at a later time for new or updated location information.

Upon receiving the request for location data from CPE 105, mobile device 110 transmits its most recent location data back to CPE 105. In some examples, the mobile device returns its location information via an open port using communication protocols such as HTTP/HTTPS, TCP/IP, or Bluetooth. The location data includes positional information such as latitude, longitude, and elevation, but may further include relevant data such as a source of the GPS data, a number of satellites used for location determination, and the time of capture.

The operations of process 500 further include providing the GPS data to one or more other devices on the network (step 515). In the example of Figure 3, CPE 105 provides some or all of the GPS data it acquired from mobile device 110 to camera 310 and TV 315. Other examples of network-connected devices with which location data may be shared via network 115 include network extenders or mesh nodes, speakers, thermostats, door locks and other security-related devices, gaming consoles, refrigerators, health and fitness devices, vacuums, air quality monitors, other internet-of-things (IoT) devices, and the like. Thus, the non-GPS devices on network 115 can benefit from location-based services and functionalities based on the provided location information. For example, TV 315 (e.g., a smart TV) can utilize the shared GPS data to provide localized content. Likewise, camera 310 (e.g., a security camera) can report its location to a security company for enhanced services.

The location data shared from CPE 105 to other devices on the network may include information such as latitude, longitude, elevation, source of GPS data, number of satellites, and time of capture. However, the location data shared may not include all of this information in some examples and may include additional information in some examples. This data may be communicated to the devices via various protocols, including but not limited to MQTT, HTTP/HTTPS, TCP/IP, WebSocket, Bluetooth, Constrained Application Protocol, or other suitable protocols. CPE 105 can also utilize protocols like IEEE 1905.1 to share the acquired location information with devices such as Wi-Fi extenders or other compatible devices. For example, CPE 105 can use the Type-Length-Value (TLV) format defined in the IEEE 1905.1 standard during the pairing process or after pairing to transmit location data.

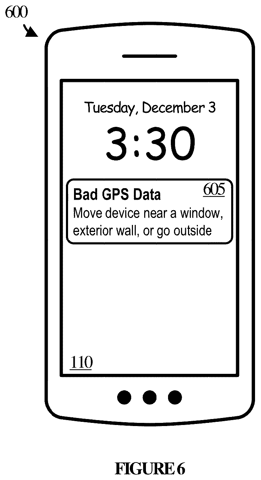

Figure 6 illustrates mobile device 110 in notification environment 600. Mobile device 110, as previously discussed, is a GPS-enabled mobile device (or otherwise location-enabled), such as a smartphone. Mobile device 110 includes a screen that displays notification 605. Notification 605 is alerting to bad GPS data at the current location of mobile device 110. Notification 605 includes directions to move the device near a window, exterior wall, or to move the device outside for improved GPS data quality.

Notification 605 is sent by CPE 105, in some examples. In certain scenarios, a broadband CPE, such as CPE 105, may send a notification (e.g., notification 605) to a mobile device (e.g., mobile device 110) prompting a user to move the mobile device to a location with better GPS signal quality. This functionality is used to improve the accuracy of the GPS location data that the mobile device provides to the CPE. The CPE, in some examples, analyzes incoming GPS data from the mobile device(s) to determine signal quality. Factors that may be considered in the analysis can include the number of satellites acquired, the time of capture, a comparison to the current time, or other factors. If the analysis reveals that the GPS data quality is poor or below a threshold, the CPE may send a notification to the mobile device alerting a user to the issue and suggesting actions to improve GPS signal strength. The notification may instruct the user to move the mobile device closer to a window, exterior wall, or outside where there is a clearer line of sight to GPS satellites.

The notification (e.g., notification 605) sent from the CPE to the mobile device can take various forms and be delivered through different methods, depending on the communication protocols and applications involved. For example, the notification may appear as a push notification, which may be delivered via an application associated with the CPE or network provider. In other examples, the notification could arrive as an in-app message, where the user must open the associated application to view details. Still on other examples, the notification may be delivered via SMS or email, if configured, providing alerts even when the user is not connected to the local network. In advanced use cases, notifications may use pop-up browser alerts triggered by the CPE's local web interface or webhooks integrated into third-party services, thereby providing actionable updates in real-time regardless of the mobile device's application ecosystem. Similarly, the content and appearance of notification 605 is merely for purposes of example and may differ in other embodiments.

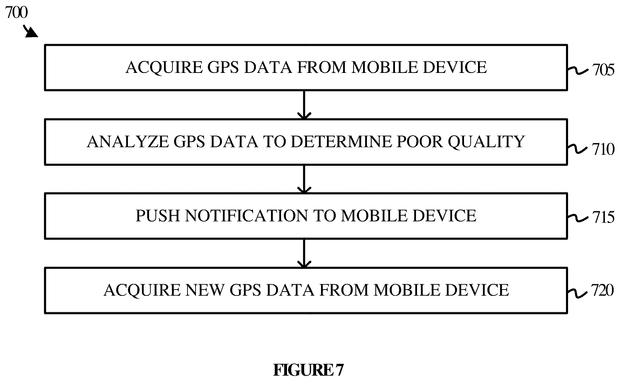

Figure 7 illustrates process 700. Process 700 is an exemplary operation of sharing location information and sending push notifications in location sharing environment 100, location sharing environment 300, and/or notification environment 600. The operations may vary in other examples. The operations of process 700, in some examples, are performed by a network device, such as CPE 105 in the examples of Figure 1 and Figure 3.

The operations of process 700 further include acquiring GPS data from at least one mobile device (step 705). In the example of Figure 1, CPE 105 acquires GPS data from mobile device 110. In some examples, CPE 105 acquires the location data from mobile device 110 in response to sending a command to the device. CPE 105 may send the command using protocols such as HTTP/HTTPS or TCP/IP over network 115, or via Bluetooth, in some examples. CPE 105, in some embodiments, transmits a request packet to mobile device 110, prompting the mobile device to retrieve and return its GPS data or other location data via the specified protocol. In some cases, the command sent from CPE 105 is sent automatically upon mobile device 110 joining the network and successfully authenticating. In other cases, CPE 105 may send a command to mobile device 110 at a later time for new or updated location information.

Upon receiving the request for location data from CPE 105, mobile device 110 transmits its most recent location data back to CPE 105. In some examples, the mobile device returns its location information via an open port using communication protocols such as HTTP/HTTPS, TCP/IP, or Bluetooth. The location data includes positional information such as latitude, longitude, and elevation, but may further include relevant data such as a source of the GPS data, a number of satellites used for location determination, and the time of capture.

The operations of process 700 further include analyzing the GPS data to determine poor quality (step 710). For example, CPE 105 may analyze (or "validate," in some embodiments) the GPS data obtained from mobile device 110 to determine the signal quality. Factors that may be considered in the analysis can include the number of satellites acquired, the time of capture, a comparison to the current time, or other factors.

The operations of process 700 further include pushing a notification to the mobile device (step 715). For example, CPE 105 may cause notification 605 to display on mobile device 110. The notification may instruct the user to move the mobile device closer to a window, exterior wall, or outside where there is a clearer line of sight to GPS satellites.

The notification (e.g., notification 605) sent from the CPE to the mobile device can take various forms and be delivered through different methods, depending on the communication protocols and applications involved. For example, the notification may appear as a push notification, which may be delivered via an application associated with the CPE or network provider. In other examples, the notification could be presented as an in-app message, where the user must open the associated application to view details. Still on other examples, the notification may be delivered via SMS or email, if configured, providing alerts even when the user is not connected to the local network. In advanced use cases, notifications may use pop-up browser alerts triggered by the CPE's local web interface or webhooks integrated into third-party services, thereby providing actionable updates in real-time regardless of the mobile device's application ecosystem.

The operations of process 700 further include acquiring new GPS data from the mobile device (step 720). For example, CPE 105 may acquire new GPS data from mobile device 110 after a user of mobile device 110 relocates mobile device 110 in response to the presentation of notification 605. The new GPS data, in some cases, is higher quality than the GPS data acquired in step 705 because the mobile device was moved to a location where the GPS signal was stronger, such as near a window, exterior wall, or outside. However, if the mobile device was not moved to a location where the GPS signal is stronger, the new GPS data may be of similar quality or lower quality than the GPS data acquired in step 705.

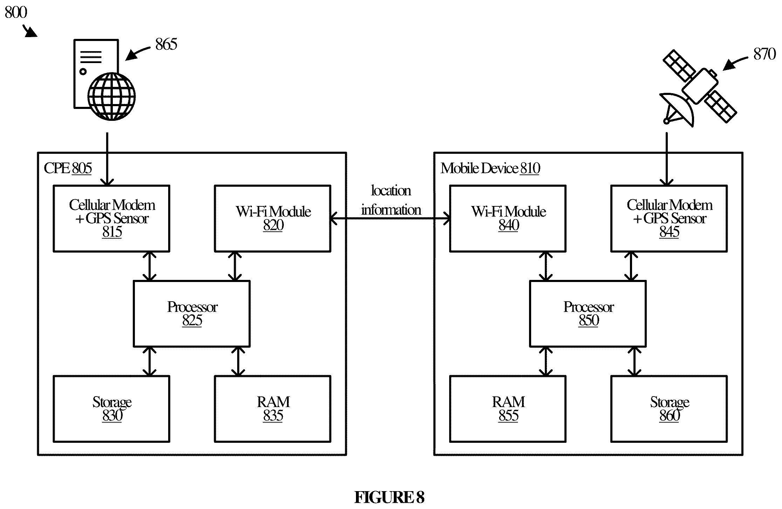

Figure 8 illustrates location sharing environment 800. Location sharing environment 800 includes CPE 805, mobile device 810, management server 865, and satellite 870. CPE 805 includes cellular modem and GPS sensor 815, Wi-Fi module 820, processor 825, storage 830, and random-access memory (RAM) 835. Mobile device 810 includes Wi-Fi module 840, cellular modem and GPS sensor 845, processor 850, RAM 855, and storage 860. The components shown in the example of Figure 8 are merely for purposes of example, and location sharing environment 800 and the components therein may include additional, fewer, or different elements than those illustrated in the example of Figure 8.

In accordance with the present example, CPE 805 is a fixed wireless gateway that connects to wireless broadband networks, such as 4G LTE, 5G, 6G, or the like. CPE 805 may be representative of one or more network devices (e.g., a broadband CPE, a modem, and/or a router) that can be installed at a customer's premises. CPE 805 is representative of CPE 105 from the previous Figures in some embodiments. CPE 805 acts as the interface between the end-user and the service provider's network infrastructure. CPE 805 enables internet connectivity and manages the distribution of this connectivity within the local network (e.g., network 115). CPE 805 serves functions such as connection establishment with the service provider's network, routing and distributing the connection to devices within the premises via Wi-Fi, ethernet, or the like, and supporting device management tasks such as network configuration, quality of service (QoS), and security measures.

In accordance with the present example, CPE 805 interfaces with a WAN to provide internet connectivity to mobile device 810 and communicate with management server 865. The WAN, in the present example, is a wireless network such as a 4G LTE, 5G, 6G, or another wireless network. CPE 805 enables routing of data between the WAN and mobile device 810. CPE 805 enables mobile device 810 to connect to the internet wirelessly via its local Wi-Fi network.

CPE 805 connects with management server 865 over the wireless network using its cellular modem, which interfaces with the nearest base station (e.g., gNB). In different embodiments, the base station could be a terrestrial base station, such as an eNB (4G) or gNB (5G/6G), or a non-terrestrial base station, such as a satellite-based station operating in low Earth orbit (LEO), medium Earth orbit (MEO), or geostationary orbit (GEO). CPE 805 establishes a secure connection to the base station using the air interface and transmits control and diagnostic data over the network. The base station forwards this data through the mobile network's core to management server 865. Communication may be conducted using standardized protocols such as TR-069, HTTPS, or MQTT to enable tasks like firmware updates, configuration management, and real-time performance monitoring.

Cellular modem and GPS sensor 815 of CPE 805 facilitates wireless connectivity and location-based functionality. The cellular modem establishes a connection to the wireless WAN, enabling CPE 805 to access the internet and communicate with remote servers, including management server 865. The cellular modem supports multiple frequency bands, carrier aggregation, and advanced technologies such as multiple input multiple output (MIMO) to optimize connection speed, reliability, and efficiency. The modem further manages data transmission, network handoffs, and signal processing for maintaining a stable link with the cellular network.

The GPS sensor of cellular modem and GPS sensor 815 provides geolocation data by receiving signals from GPS satellites and using trilateration to calculate the device's position. This location data may be used for a variety of purposes, including network optimization, service provisioning, troubleshooting, geofencing for location-aware features, and the like. Although CPE 805 includes a GPS sensor, the GPS signal is not always strong or accurate depending on the placement of CPE 805-a problem described in the context of preceding examples. The GPS sensor may include hardware components such as radio frequency (RF) transceivers for signal modulation and demodulation, antenna interfaces for communication with cellular towers and GPS satellites, and processors for handling signal decoding and location calculation. Cellular modem and GPS sensor 815 additionally provides integrated operation between connectivity and location functions, enabling CPE 805 to perform advanced tasks such as load balancing based on geolocation or reporting its position to the management server.

Wi-Fi module 820 is responsible for enabling WLAN connectivity, allowing nearby devices, such as mobile device 810, to connect to CPE 805 for internet access and communication. Wi-Fi module 820 includes a Wi-Fi radio, antennas, and supporting hardware to transmit and receive data over wireless frequencies, supporting dual-band (2.4 GHz and 5 GHz) or tri-band configurations for enhanced performance in some embodiments. Wi-Fi module 820 may incorporate features such as MIMO technology, beamforming, and advanced security protocols like WPA3 to optimize connection reliability, coverage, and security. Wi-Fi module 820 manages device authentication, data traffic routing, and dynamic resource allocation to maintain efficient communication with multiple connected devices.

Processor 825 manages data processing, system operations, and communication between hardware modules on CPE 805. Processor 825, in some implementations, is a system-on-chip (SoC). Processor 825 may integrate a CPU for executing instructions, a network processing unit (NPU) for handling high-speed data traffic, and other specialized cores for tasks such as security encryption and signal processing. Processor 825 may orchestrate core functions on CPE 805, including managing cellular and Wi-Fi connections, routing data packets, and executing firmware. Additionally, processor 825 performs real-time processing for resource allocation, error correction, and optimization of network performance, ensuring efficient and reliable operation of the gateway.

Storage 830 is a non-volatile memory component used to retain system data, configuration files, and firmware. Storage 830 may consist of flash memory and/or solid-state storage, providing reliable and durable data retention. Storage 830 is responsible for housing the operating system of CPE 805, firmware updates, and user-defined settings. Additionally, storage 830 may store logs, diagnostic data, and temporary files for troubleshooting and management purposes, enabling seamless operation and remote maintenance of CPE 805.

RAM 835 is a volatile memory component that temporarily stores data and instructions for real-time processing and operation. RAM 835 provides high-speed access for the processor to execute tasks such as managing active network connections, handling data packet routing, and running firmware processes. RAM 835 is cleared when the device is powered off.

Mobile device 810 is representative of a portable computing device designed for communication, connectivity, and computation. Mobile device 810 may be representative of a smartphone, tablet, wearable device, or other mobile device. Mobile device 810 is representative of mobile device 110 from the preceding Figures, in some examples.

Wi-Fi module 840 of mobile device 810 is a hardware component that facilitates wireless communication with LANs. Wi-Fi module 840 includes a Wi-Fi radio, RF transceivers, and integrated antennas to transmit and receive data over designated frequency bands, such as 2.4 GHz, 5 GHz, 6 GHz for Wi-Fi 6E, or other bands. Wi-Fi modules 840 may employ digital signal processors (DSPs) to modulate and demodulate signals and use protocols such as OFDM (Orthogonal Frequency-Division Multiplexing) for efficient data transmission. Wi-Fi module 840 may support encryption algorithms and security protocols, such as WPA3, for secure communication. Wi-Fi module 840 may also incorporate MIMO technology for improved throughput and reliability, as well as beamforming for directional signal optimization.

Cellular modem and GPS sensor 845 integrates hardware and firmware to enable cellular network communication and geolocation functionality. The cellular modem includes RF transceivers, a baseband processor, and antenna interfaces for transmitting and receiving data over multiple frequency bands, such as LTE and 5G NR. The modem may implement modulation schemes like QAM and support carrier aggregation to optimize data throughput. The GPS sensor consists of a GNSS (Global Navigation Satellite System) receiver, RF front-end circuitry, and a digital signal processor to decode signals from multiple satellite constellations, which may include GPS, GLONASS, and Galileo. The GPS module may incorporate clock synchronization components to ensure precise signal timing for trilateration. The module also includes power management circuits to optimize energy usage and firmware to manage network handoffs, error correction, and location calculations. Together, the components handle communication protocols, maintain network connectivity, and process satellite signals to provide accurate positioning data.

Processor 850 is a system-on-chip (SoC) that integrates multiple cores, including a central processing unit (CPU) for general-purpose computing and specialized cores such as a GPU for graphics processing and an NPU for machine learning tasks. Processor 850 orchestrates the execution of the device's operating system, applications, and communication protocols, while managing data flows between hardware components like cellular modem and GPS sensor 845, Wi-Fi module 840, and sensors. Processor 850 may include cache memory for low-latency data access and implement advanced power management features to optimize performance under varying workloads. Additionally, processor 850 may handle encryption and security functions to provide secure data processing and communication.

RAM 855 is a high-speed volatile memory module used to store data and instructions required for active processes and tasks. RAM 855 enables processor 850 to quickly access and manipulate data for running the operating system, applications, and background services. RAM 855 uses dynamic memory cells and a memory controller to facilitate low-latency read/write operations, supporting multitasking and high-performance workloads. As a volatile memory, the contents of RAM 855 are cleared when the mobile device is powered off.

Storage 860 is non-volatile memory used to retain system data, user files, and application information, even when mobile device 810 is powered off. Storage 860 may include NAND flash memory, which provides high-density storage with fast read/write capabilities. Storage 860 houses the operating system, firmware, installed applications, and user-generated data such as photos and documents on mobile device 810. Additionally, storage 860 supports file system structures to manage data organization and may include secure partitions for encrypted data and critical system resources.

In accordance with the example of Figure 8, management server 865 is a centralized system designed to remotely monitor, configure, and/or maintain CPE 805. Management server 865 may be hosted in a remote data center or cloud environment, in some examples. Management server 865 communicates with CPE 805 the wireless network using one or more protocols (e.g., TR-069, HTTP/HTTPS, SNMP, MQTT, WebSockets, CoAP). Functions of management server 865 may include but are not limited to delivering firmware updates to CPE 805, applying configuration changes to CPE 805, collecting diagnostic data from CPE 805, and monitoring device performance of CPE 805. The remote access of management server 865 to CPE 805 enables services providers to streamline operations, troubleshoot issues, and optimize performance without the need for on-site intervention. Management server 865 may be a component in managing large-scale deployment of CPEs, in some examples.

Satellite 870, in accordance with the example of Figure 8, is a GPS satellite. Satellite 870, in some examples, includes one or more atomic clocks to maintain precise timing and broadcasts signals containing the satellite's orbital position and timestamp. These signals are transmitted on specific radio frequencies and include data for trilateration, the process by which a GPS receiver calculates its position by measuring the time delay of signals from multiple satellites.

It should be noted that, while the present example is described in the context of the GPS system, including GPS satellites and GPS-enabled devices, other examples may utilize alternative or complementary positioning systems. Such systems may include existing global navigation satellite systems (GNSS), such as GLONASS, Galileo, or BeiDou, as well as regional navigation systems like QZSS or NavIC. Additional technologies, such as low Earth orbit (LEO) satellite constellations, enhanced terrestrial systems like eLoran, or network-based solutions leveraging 5G cellular positioning, may be used in place of or in conjunction with the GPS system. Other positioning technologies such as quantum navigation systems or hybrid approaches integrating GNSS with inertial measurement units (IMUs), vision-based systems, or other location techniques, are also within the scope of the disclosure. Accordingly, the concepts described herein are not limited to GPS but extend to any present or emerging positioning technologies that provide similar or enhanced positioning functionality.

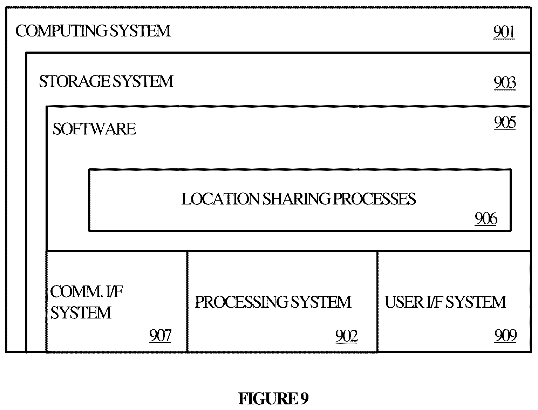

Figure 9 illustrates computing system 901, which is representative of any system or collection of systems in which the various processes, programs, services, and scenarios disclosed herein may be implemented. Examples of computing system 901 include, but are not limited to broadband CPEs, mobile phones, server computers, web servers, cloud computing platforms, and data center equipment, as well as any other type of physical or virtual server machine, container, and any variation or combination thereof. Examples also include desktop and laptop computers, tablet computers, and wearable devices.

Computing system 901 may be implemented as a single apparatus, system, or device or may be implemented in a distributed manner as multiple apparatuses, systems, or devices. Computing system 901 includes, but is not limited to, processing system 902, storage system 903, software 905, communication interface system 907, and user interface system 909 (optional). Processing system 902 is operatively coupled with storage system 903, communication interface system 907, and user interface system 909.

Processing system 902 loads and executes software 905 from storage system 903. Software 905 includes and implements location sharing processes 906, which is representative of the processes for sharing location data between devices as discussed with respect to the preceding Figures, such as process 200, process 400, process 500, and/or process 700. When executed by processing system 902, software 905 directs processing system 902 to operate as described herein for at least the various processes, operational scenarios, and sequences discussed in the foregoing implementations. Computing system 901 may optionally include additional devices, features, or functionality not discussed for purposes of brevity.

Referring still to Figure 9, processing system 902 may comprise a microprocessor and other circuitry that retrieves and executes software 905 from storage system 903. Processing system 902 may be implemented within a single processing device but may also be distributed across multiple processing devices or sub-systems that cooperate in executing program instructions. Examples of processing system 902 include general purpose central processing units, graphical processing units, application specific processors, and logic devices, as well as any other type of processing device, combinations, or variations thereof.

Storage system 903 may comprise any computer readable storage media readable by processing system 902 and capable of storing software 905. Storage system 903 may include volatile and nonvolatile, removable and non-removable media implemented in any method or technology for storage of information, such as computer readable instructions, data structures, program modules, or other data. Examples of storage media include random access memory, read only memory, magnetic disks, optical disks, flash memory, virtual memory and non-virtual memory, magnetic cassettes, magnetic tape, magnetic disk storage or other magnetic storage devices, or any other suitable storage media. In no case is the computer readable storage media a propagated signal.

In addition to computer readable storage media, in some implementations storage system 903 may also include computer readable communication media over which at least some of software 905 may be communicated internally or externally. Storage system 903 may be implemented as a single storage device but may also be implemented across multiple storage devices or sub-systems co-located or distributed relative to each other. Storage system 903 may comprise additional elements, such as a controller, capable of communicating with processing system 902 or possibly other systems.

Software 905 (including location sharing processes 906) may be implemented in program instructions and among other functions may, when executed by processing system 902, direct processing system 902 to operate as described with respect to the various operational scenarios, sequences, and processes illustrated herein. For example, software 905 may include program instructions for sending or receiving location data between one or more devices as described herein.

In particular, the program instructions may include various components or modules that cooperate or otherwise interact to carry out the various processes and operational scenarios described herein. The various components or modules may be embodied in compiled or interpreted instructions, or in some other variation or combination of instructions. The various components or modules may be executed in a synchronous or asynchronous manner, serially or in parallel, in a single threaded environment or multi-threaded, or in accordance with any other suitable execution paradigm, variation, or combination thereof. Software 905 may include additional processes, programs, or components, such as operating system software, virtualization software, or other application software. Software 905 may also comprise firmware or some other form of machine-readable processing instructions executable by processing system 902.

In general, software 905 may, when loaded into processing system 902 and executed, transform a suitable apparatus, system, or device (of which computing system 901 is representative) overall from a general-purpose computing system into a special-purpose computing system customized to perform the processes described herein. Indeed, encoding software 905 on storage system 903 may transform the physical structure of storage system 903. The specific transformation of the physical structure may depend on various factors in different implementations of this description. Examples of such factors may include, but are not limited to, the technology used to implement the storage media of storage system 903 and whether the computer-storage media are characterized as primary or secondary, etc.

For example, if the computer readable storage media are implemented as semiconductor-based memory, software 905 may transform the physical state of the semiconductor memory when the program instructions are encoded therein, such as by transforming the state of transistors, capacitors, or other discrete circuit elements constituting the semiconductor memory. A similar transformation may occur with respect to magnetic or optical media. Other transformations of physical media are possible without departing from the scope of the present description, with the foregoing examples provided only to facilitate the present discussion.

Communication interface system 907 may include communication connections and devices that allow for communication with other computing systems (not shown) over communication networks (not shown). Examples of connections and devices that together allow for inter-system communication may include network interface cards, antennas, power amplifiers, RF circuitry, transceivers, and other communication circuitry. The connections and devices may communicate over communication media to exchange communications with other computing systems or networks of systems, such as metal, glass, air, or any other suitable communication media. The aforementioned media, connections, and devices are well known and need not be discussed at length here.

Communication between computing system 901 and other computing systems (not shown), may occur over a communication network or networks and in accordance with various communication protocols, combinations of protocols, or variations thereof. Examples include intranets, internets, the Internet, local area networks, wide area networks, wireless networks, wired networks, virtual networks, software defined networks, data center buses and backplanes, or any other type of network, combination of network, or variation thereof. The aforementioned communication networks and protocols are well known and need not be discussed at length here.

Although the descriptions provided herein may be in the context of certain radio access technologies, networks, and network topologies, such as 4G LTE or 5G/NR mobile communications, the proposed concepts, schemes, and any variations thereof may be implemented in, for, and by other types of radio access technologies, networks, and network topologies. Such radio access technologies, networks, and network topologies may include, for example and without limitation, Internet-of-Things (IoT), Narrow Band Internet of Things (NB-IoT), vehicle-to-everything (V2X), fixed wireless internet, non-terrestrial networks (NTN), and space-based technologies, such as communications involving low Earth orbit (LEO), medium Earth orbit (MEO), or geostationary orbit (GEO) satellites. Thus, the scope of the disclosure is not limited to the examples described herein.

As will be appreciated by one skilled in the art, aspects of the present invention may be embodied as a system, method, computer program product, or otherwise. Accordingly, aspects of the present invention may take the form of an entirely hardware implementation, an entirely software implementation (including firmware, resident software, micro-code, etc.) or an implementation combining software and hardware aspects that may all generally be referred to herein as a "circuit," "module" or "system." Furthermore, aspects of the present invention may take the form of a computer program product embodied in one or more computer readable medium(s) having computer readable program code embodied thereon.

Indeed, the included descriptions and figures depict specific implementations to teach those skilled in the art how to make and use the best mode. For the purpose of teaching inventive principles, some conventional aspects have been simplified or omitted. Those skilled in the art will appreciate variations from these implementations that fall within the scope of the disclosure. Those skilled in the art will also appreciate that the features described above may be combined in various ways to form multiple implementations. As a result, the invention is not limited to the specific implementations described above, but only by the claims and their equivalents.

The wireless data network circuitry described above comprises computer hardware and software that form special-purpose wireless system circuitry to serve wireless user devices based on policies. The computer hardware comprises processing circuitry like CPUs, DSPs, GPUs, transceivers, bus circuitry, and memory. To form these computer hardware structures, semiconductors like silicon or germanium are positively and negatively doped to form transistors. The doping comprises ions like boron or phosphorus that are embedded within the semiconductor material. The transistors and other electronic structures like capacitors and resistors are arranged and metallically connected within the semiconductor to form devices like logic circuitry and storage registers. The logic circuitry and storage registers are arranged to form larger structures like control units, logic units, and Random-Access Memory (RAM). In turn, the control units, logic units, and RAM are metallically connected to form CPUs, DSPs, GPUs, transceivers, bus circuitry, and memory.

In the computer hardware, the control units drive data between the RAM and the logic units, and the logic units operate on the data. The control units also drive interactions with external memory like flash drives, disk drives, and the like. The computer hardware executes machine-level software to control and move data by driving machine-level inputs like voltages and currents to the control units, logic units, and RAM. The machine-level software is typically compiled from higher-level software programs. The higher-level software programs comprise operating systems, utilities, user applications, and the like. Both the higher-level software programs and their compiled machine-level software are stored in memory and retrieved for compilation and execution. On power-up, the computer hardware automatically executes physically-embedded machine-level software that drives the compilation and execution of the other computer software components which then assert control. Due to this automated execution, the presence of the higher-level software in memory physically changes the structure of the computer hardware machines into special-purpose wireless system circuitry to serve wireless user devices based on policies.

Unless the context clearly requires otherwise, throughout the description and the claims, the words "comprise," "comprising," "such as," and "the like" are to be construed in an inclusive sense, as opposed to an exclusive or exhaustive sense, that is to say, in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words in the above Detailed Description using the singular or plural number may also include the plural or singular number respectively. The word "or," in reference to a list of two or more items, covers all of the following interpretations of the word: any of the items in the list, all of the items in the list, and any combination of the items in the list.

The above description and associated figures teach the best mode of the invention. The following claims specify the scope of the invention. Note that some aspects of the best mode may not fall within the scope of the invention as specified by the claims. Those skilled in the art will appreciate that the features described above can be combined in various ways to form multiple variations of the invention. Thus, the invention is not limited to the specific embodiments described above, but only by the following claims and their equivalents. The above Detailed Description of examples of the technology is not intended to be exhaustive or to limit the technology to the precise form disclosed above. While specific examples for the technology are described above for illustrative purposes, various equivalent modifications are possible within the scope of the technology, as those skilled in the relevant art will recognize. For example, while processes or blocks are presented in a given order, alternative implementations may perform routines having operations, or employ systems having blocks, in a different order, and some processes or blocks may be deleted, moved, added, subdivided, combined, and/or modified to provide alternative or subcombinations. Each of these processes or blocks may be implemented in a variety of different ways. Also, while processes or blocks are at times shown as being performed in series, these processes or blocks may instead be performed or implemented in parallel or may be performed at different times. Further any specific numbers noted herein are only examples: alternative implementations may employ differing values or ranges.

The teachings of the technology provided herein can be applied to other systems, not necessarily the system described above. The elements and acts of the various examples described above can be combined to provide further implementations of the technology. Some alternative implementations of the technology may include not only additional elements to those implementations noted above, but also may include fewer elements.

These and other changes can be made to the technology in light of the above Detailed Description. While the above description describes certain examples of the technology, and describes the best mode contemplated, no matter how detailed the above appears in text, the technology can be practiced in many ways. Details of the system may vary considerably in its specific implementation, while still being encompassed by the technology disclosed herein. As noted above, particular terminology used when describing certain features or aspects of the technology should not be taken to imply that the terminology is being redefined herein to be restricted to any specific characteristics, features, or aspects of the technology with which that terminology is associated. In general, the terms used in the following claims should not be construed to limit the technology to the specific examples disclosed in the specification, unless the above Detailed Description section explicitly defines such terms. Accordingly, the actual scope of the technology encompasses not only the disclosed examples, but also all equivalent ways of practicing or implementing the technology under the claims.

To reduce the number of claims, certain aspects of the technology are presented below in certain claim forms, but the applicant contemplates the various aspects of the technology in any number of claim forms. For example, while only one aspect of the technology is recited as a computer-readable medium claim, other aspects may likewise be embodied as a computer-readable medium claim, or in other forms, such as being embodied in a means-plus-function claim. Any claims intended to be treated under 35 U.S.C. § 112(f) will begin with the words "means for," but use of the term "for" in any other context is not intended to invoke treatment under 35 U.S.C. § 112(f). Accordingly, the applicant reserves the right to pursue additional claims after filing this application to pursue such additional claim forms, in either this application or in a continuing application.

## Claims

1. A method comprising:
by a network device:
receiving a request from a mobile device to join a local network managed by the network device, wherein the network device provides access to a wide area network for devices connected to the network device;
in response to the request, connecting the mobile device to the local network;
sending a command from the network device to the mobile device to request location data for the mobile device;
receiving the location data from the mobile device in response to the command; and
providing a location of the network device to a server associated with the network device by sending the location data for the mobile device to the server over the wide area network.

2. The method of claim 1, further comprising receiving, in addition to the location data, a capture time of the location data and a number of satellites utilized to determine a location of the mobile device indicated by the location data.

3. The method of claim 2, further comprising:
sending a second command to a second mobile device connected to the local network to request different location data for the second mobile device;
receiving the different location data from the second mobile device; and
receiving a capture time of the different location data and a number of satellites utilized to determine a location of the second mobile device indicated by the location data.

4. The method of claim 3, further comprising:
conducting a first comparison of the capture time of the different location data to the capture time of the location data;
conducting a second comparison of the number of satellites utilized to determine the location of the second mobile device to the number of satellites utilized to determine the location of the mobile device; and
determining, based on at least one of the first comparison and the second comparison, to provide the location data from the mobile device to the server.

5. The method of any preceding claim, further comprising sending a notification to be displayed on the mobile device, wherein the notification instructs that the mobile device be moved closer to a window.

6. The method of any preceding claim, wherein the location data is Global Positioning System (GPS) data collected with a GPS sensor of the mobile device.

7. The method of any preceding claim, further comprising sending the location data to a different device connected to the local network.

8. The method of claim 7, wherein the different device comprises one of a television, a security camera, or a mesh node.

9. The method of any preceding claim, wherein the network device is a fixed wireless gateway and the wide area network is a wireless communication network.

10. The method of any preceding claim, wherein the server is a management server responsible for configuration and maintenance of the network device.

11. A system comprising:
one or more computer-readable storage media;
a processing system operatively coupled with the one or more computer-readable storage media; and
program instructions stored on the one or more computer-readable storage media, wherein the program instructions, when read and executed by the processing system, direct the processing system to at least:
receive a request from a mobile device to join a local network managed by a network device, wherein the network device provides access to a wide area network for devices connected to the network device;
in response to the request, connect the mobile device to the local network;
send a command from the network device to the mobile device to request location data for the mobile device;
receive the location data from the mobile device in response to the command; and
provide a location of the network device to a server associated with the network device by sending the location data for the mobile device to the server over the wide area network.

12. The system of claim 11, wherein the program instructions, when read and executed by the processing system, further direct the processing system to receive, in addition to the location data, a capture time of the location data and a number of satellites utilized to determine a location of the mobile device indicated by the location data.

13. The system of claim 12, wherein the program instructions, when read and executed by the processing system, further direct the processing system to:
send a second command to a second mobile device connected to the local network to request different location data for the second mobile device;
receive the different location data from the second mobile device; and
receive a capture time of the different location data and a number of satellites utilized to determine a location of the second mobile device indicated by the location data.

14. The system of claim 13, wherein the program instructions, when read and executed by the processing system, further direct the processing system to:
conduct a first comparison of the capture time of the different location data to the capture time of the location data;
conduct a second comparison of the number of satellites utilized to determine the location of the second mobile device to the number of satellites utilized to determine the location of the mobile device; and
determine, based on at least one of the first comparison and the second comparison, to provide the location data from the mobile device to the server.

15. One or more non-transitory computer-readable storage media having program instructions stored thereon, wherein the program instructions, when executed by a computing system, direct the computing system to perform operations, the operations comprising:
receiving a request from a mobile device to join a local network managed by a network device, wherein the network device provides access to a wide area network for devices connected to the network device;
in response to the request, connecting the mobile device to the local network;
sending a command from the network device to the mobile device to request location data for the mobile device;
receiving the location data from the mobile device in response to the command; and
providing a location of the network device to a server associated with the network device by sending the location data for the mobile device to the server over the wide area network.
